# EUROPEAN PATENT SPECIFICATION

(11) **EP 1 374 193 B1**
(45) Date of publication and mention of the grant of the patent: **17.10.2007**
(21) Application number: 02717901.9
(22) Date of filing: 04.04.2002
(51) Int. Cl.: G07F 19/00, G07F 7/02

(54) **Method for conducting secure e-commerce transactions**
Verfahren zur Durchführung von gesicherten E-Commerce-Transaktionen
Procédé pour conduire des transactions commerciales électroniques sécurisées

(30) Priority: 04.04.2001 CA 2343250
(43) Date of publication of application: 02.01.2004
(60) Divisional application: 06018948.7
(73) Proprietor: SIPS Inc., Oakville, Ontario L6J 3R4 (CA)
(72) Inventor: CACOILO, Julio, Toronto, Ontario M5J 2P1 (CA); GRAHAM, Robert, J., Toronto, Ontario M5L 1J3 (CA)
(74) Representative: Gosnall, Toby
(86) International application number: PCT/CA2002/000465
(87) International publication number: WO 2002/082391

(56) References cited:
- EP-A- 1 026 644
- EP-A- 1 028 401
- EP-A- 1 065 634
- WO-A-00/75843
- US-A- 6 000 832
- US-A- 6 029 890

## Description

### FIELD OF THE INVENTION

The present invention relates to a system for completion of e-commerce transactions. In particular, the present invention relates to an e-commerce authorization system which facilitates secure transmission of account data for completion of e-commerce transactions.

### BACKGROUND OF THE INVENTION

There presently exist two e-commerce clearance systems for facilitating e-commerce transactions between customers and merchants: a debit-based clearance system and a credit-based clearance system. The debit-based clearance system comprises a number of banking institution servers interconnected through a secure wide-area network Each banking institution server is in communication with a respective secure local customer account database which maintains bank account information for each of their respective bank customers.

Each e-commerce customer establishes a bank account with one of the banking institutions, and then obtains a debit card and a Personal Identification Number (PIN) for accessing the customer's bank account. Typically, the debit card comprises a magnetic stripe card which is encoded with a bank card number associated with the customer's bank account number, the leading digits of which comprise a Bank Identification Number (BIN) which uniquely identifies the customer's banking institution. The bank card number and the associated PIN are securely stored in the banking institution's local customer account database.

In addition, each e-commerce merchant establishes a bank account with a banking institution, and is provided with one or more Point of Sale (POS) terminals by the merchant's banking institution. Typically, each POS terminal is in communication with the issuing banking institution server over a secure network, and is configured with a magnetic card reader for reading customers' debit cards and a keypad which allows customers to input their respective assigned PINs.

To enter into an e-commerce transaction using the debit card, the customer attends at the premises of the e-commerce merchant, and selects goods or services for purchase. The merchant enters the price of the selected good or service into the merchant's transaction register, and then requests the customer to swipe its debit card through the magnetic card reader of the merchant's POS terminal and to input the customer's assigned PIN into the POS terminal keypad. The POS terminal encrypts the entered debit card data and the PIN, and then transmits the encrypted data to the merchant's banking institution server over the secure network, together with a merchant identifier identifying the merchant and a transaction amount identifying the cost of the transaction.

Upon receipt, the merchant's banking institution server uses the BIN included with the transmitted data to route the data to the customer's banking institution server. The customer's banking institution server accesses the associated local account database to determine the authenticity of the received bank card number and PIN. If the received data is authenticated and the customer has sufficient funds in the identified bank account, the customer's banking institution server debits the customer's bank account and then replies to the merchant's banking institution server with a message indicating that the data provided by the customer was authorized. The merchant's banking institution server then replies to the merchant, via the merchant's POS terminal, with a message indicating that the transaction was approved. Subsequently, the merchant's banking institution negotiates with the customer's banking institution for clearance of the transaction, with the merchant's bank account being credited in accordance with the transaction amount.

The credit-based clearance system is similar to the debit-based clearance system. The credit-based clearance system comprises a number of credit institution servers interconnected through a secure wide-area network. Each credit institution server is affiliated with a respective banking institution, and is in communication with a respective secure local customer account database which maintains credit account information for each of their respective credit customers.

Each e-commerce customer establishes a credit account with one of the credit institutions, with the credit account having an associated maximum credit limit. The customer then obtains a credit card which includes a magnetic stripe card encoded with the customer's credit account number and expiry date, with the initial digits of the account number identifying the customer's credit institution. The credit account number and expiry date are securely stored in the credit institution's local customer account database.

In addition, each e-commerce merchant establishes a bank account with a banking institution, and then is provided with one or more POS terminals by the merchant's banking institution. As above, typically each POS terminal is in communication with the issuing banking institution server over a secure network, and is configured with a magnetic card reader for reading customers' credit cards.

To enter into an e-commerce transaction using the credit card, typically the customer attends at the premises of the e-commerce merchant, and selects goods or services for purchase. The merchant enters the price of the selected good or service into the merchant's transaction register, and then swipes the customers credit card through the magnetic card reader of the merchant's POS terminal. The customer's credit account number and expiry date are then transmitted to the merchant's banking institution server over the secure network, together with a merchant identifier identifying the merchant and a transaction amount identifying the cost of the transaction.

Alternately, the merchant may establish a virtual store accessible via a web page, with the web page being provided by the merchant's Internet server and being designed to display goods or services for purchase. The customer attends at the merchant's virtual store using a suitable Internet browser-enabled computing device, and selects one or more of the goods or services. The customer then transmits its credit card number and expiry date to the merchant's Internet server over an encrypted connection established between the customer's Internet browser and the merchant's Internet server. The merchant's Internet server then transmits the customer's credit account number and expiry date to the merchant's banking institution, together with a merchant identifier identifying the merchant and a transaction amount identifying the cost of the transaction.

In either case, the merchant's banking institution server routes the received transaction data to the customer's credit institution server upon receipt. The customer's credit institution server accesses the associated local customer account database to determine the authenticity of the received credit card number and the credit available to the customer. If the received data is authenticated and the customer has not exceeded the assigned credit limit, the customer's banking institution server reduces the credit available to the customer in accordance with the received transaction amount, and then replies to the merchant's banking institution server with a message indicating that the data provided by the customer was authentic. The merchant's banking institution server then replies to the merchant, via the merchant's POS terminal or the merchant's Internet server, with a message indicating whether the transaction was approved. Subsequently, the merchant's banking institution negotiates with the customer's banking institution for payment of the transaction, with the merchant's bank account being credited and the customer's credit account being debited in accordance with the transaction amount.

Although the aforementioned conventional e-commerce clearance systems have become quite popular with both customers and merchants, both systems can expose the customer and the merchant to fraudulent use of debit or credit cards. For instance, although a customer's debit card number and PIN are encrypted before being transmitted to the merchant's financial institution server, this information can be captured by an unscrupulous merchant via the POS terminal and used to facilitate payment for unauthorized transactions. Alternately, an unscrupulous customer or merchant could capture credit card data transmitted over the Internet to facilitate payment for subsequent unauthorized transactions. Accordingly, attempts have been made to address the deficiencies of the conventional e-commerce clearance systems.

One such e-commerce clearance system, introduced by Orbiscom Ltd., employs Controlled Payment Numbers (CPNs) to increase the security of credit-based e-commerce transactions conducted over the Internet. According to this system, a customer registers for a credit account with a CPN-enabled bank, and obtains a credit account number associated with the credit account. The customer also obtains a unique user ID and password combination for identifying the customer to the computer server, and downloads and installs on the customer's computing device proprietary software which is designed to interface with the customer's banking institution server.

Subsequently, the customer attends at a merchant's virtual store and selects one or more of the merchant's goods or services for purchase. When the merchant's web site requests the customer's credit card number, the customer runs the installed proprietary software to obtain a unique CPN. The proprietary software requests that the customer input the assigned user ID and password combination, a transaction amount and a duration for which the CPN should be active. The proprietary software then encrypts and transmits the received information to the customer's banking institution server over the Internet. After verification of the authenticity of the user ID and password combination, the banking institution server generates a unique CPN, the initial digits of which identify the number as a CPN number issued by the customer's banking institution. The customer's banking institution server then transmits the CPN back to the proprietary software over a secure communications channel, and stores the CPN in a local secure database together with the specified transaction amount and duration.

The customer provides the merchant's virtual store with the received CPN, upon receipt. The merchant's virtual store then transmits the received CPN to its banking institution server for routing to the customer's banking institution server for clearance. Upon receipt of the CPN, the customer's banking institution server queries its local secure database for comparison against the stored CPNs. If the received CPN matches one of the stored CPNs, and the transaction amount and duration parameters assigned to the stored CPN are consistent with the pending transaction, the customer's banking institution server reduces the credit balance of the customer's credit account in accordance with the specified transaction amount, and then replies to the merchant's banking institution server with a message indicating whether the transaction was approved. Subsequently, the merchant's banking institution negotiates with the customer's banking institution for payment of the transaction.

Another credit-based e-commerce clearance system, introduced by Cyota Inc., employs single-use credit card numbers to increase the security of e-commerce transactions conducted over the Internet. According to this system, a customer registers for a credit account with its banking institution, and obtains a credit account number associated with the credit account. The customer also registers as a registered user by providing Cyota with its credit account number, which is then stored securely on a proprietary Cyota clearance server. The customer then obtains a unique user ID and password combination for identifying the customer to the clearance server, and downloads and installs on the customer's computing device proprietary software which is designed to interface with the clearance server.

Subsequently, the customer attends at a merchant's virtual store and selects one or more of the merchant's goods or services for purchase. When the merchant's web site requests the customer's credit card number, the proprietary software intercepts the credit card request and requests that the customer input the assigned user ID and password combination, and a transaction amount. The proprietary software then encrypts and transmits the received information to the clearance server over the Internet. After verification of the authenticity of the user ID and password combination, the clearance server generates a unique single-use credit card number, the initial digits of which identify the number as a card number issued by Cyota. The clearance server then transmits the single use card number back to the proprietary software over a secure communications channel, and stores the CPN in a local secure database together with the specified transaction amount.

The proprietary software transmits the received single-use card number and the transaction data to the merchant's virtual store, which is then forwarded to the merchant's banking institution server for clearance. The merchant's banking institution server then routes the transaction data to the clearance server. Upon receipt of the transaction data, the clearance server queries its local database for comparison against the stored single-use credit card numbers. If the received single-use credit card number matches one of the stored card numbers, and the transaction data associated with the stored credit card number is consistent with the pending transaction, the clearance server replaces the single-use credit card number with the customer's actual credit card number. The clearance server then forwards the customer's credit card number and the transaction data to the customer's banking institution for authorization of the transaction.

As will be apparent, the foregoing credit-based e-commerce clearance schemes enhance the security of Internet-based e-commerce transactions since the customer's credit account number is never revealed to the merchant nor transmitted over the Internet. However, the existing infrastructure for clearance of credit transactions limits credit account numbers to a maximum of 16 digits. Since the initial series of digits of a credit account number identify the issuing banking institution and the final digit of the credit account number is a checksum digit, the number of available CPNs or single-use card numbers are limited. Further, since the customer must contact the customer's banking institution server before commencement of an e-commerce transaction, these schemes are limited to scenarios in which such communication is possible. In addition, the necessity of contacting the banking institution server or a clearance server before commencement of an e-commerce transaction can introduce unnecessary delays in the completion of the e-commerce transaction.

Another credit-based e-commerce clearance scheme, proposed by Thomas Lopatic (http://lists.commerce.net/archives/set-discuss/199906/msg00001.html; http://lists.commerce.net/archives/set-discuss/199906/msg00004.html), uses a random PIN to enhance security of the credit-based e-commerce transaction. According to this scheme, a customer registers its wireless telephone number with the customer's credit institution. Subsequently, when the customer attends at the premises of a merchant, and selects goods or services for purchase, the customer provides the merchant with the customer's wireless telephone number, encoded as part of a Secure Electronic Transaction (SET) wallet. The merchant transmits the SET wallet to the customer's credit institution, which then generates and transmits a random PIN to the customer's wireless telephone. The customer provides the merchant with the random PIN, as part of a SET wallet, which is then transmitted back to the customer's credit institution for authentication. If the random PIN transmitted matches the random PIN received, the customer's identity is confirmed and the credit institution settles the transaction in the usual manner.

As will be apparent, this scheme is more limiting than the CPN scheme or the single-use PIN scheme, discussed above, since the number of available users is limited by the 10-digit limitation for telephone numbers. Also, this latter scheme is only viable in locales where wireless communication is possible. Further, the necessity of contacting the credit institution twice during the transaction can significantly increase the time required to complete the e-commerce transaction. In addition, SET technology requires that the customer, merchant, the customer's credit institution and the merchant's credit institution all install software to validate all the parties involved in the transaction, thereby increasing the bar to adoption of this scheme. Accordingly, there remains a need for a secure e-commerce clearance system which can be introduced on a large scale without requiring significant changes to the existing e-commerce transaction infrastructure. Further, there remains a need for a secure ecommerce clearance system which does not impede the speed of the settlement process and is not hindered by communications limitations.

One prior art system disclosed in US 6,000,832, in the name of Microsoft relates to providing an online virtual commerce card with associated customer account details. A further prior art system is disclosed in EP 1028401 which authorises an e-commerce transaction with a card number which may be generated on a user's computing device.

### SUMMARY OF THE INVENTION

According to the present invention, there is provided a method according to claim 1.

A secure e-commerce authorization system may include a transaction receiver, an authorization processor and an authorization transmitter. The transaction receiver is configured to receive a transaction identifier associated with a proposed transaction. The authorization processor is in communication with the transaction receiver for determining the authenticity of the received transaction identifier. The authorization transmitter is in communication with the authorization processor for providing an authorization signal for the proposed transaction, with the authorization signal being determined in accordance with the determined authenticity.

A secure e-commerce transaction system may be provided which includes a transaction identifier processor, and a transaction transmitter in communication with the transaction identifier processor. The transaction identifier processor is configured to generate a transaction identifier uniquely associated with a proposed transaction. The transaction transmitter is configured to transmit transaction data associated with the proposed transaction, with the transaction data including the generated transaction identifier.

There may be provided a secure e-commerce transaction terminal for conducting secure e-commerce transactions. The secure e-commerce transaction terminal includes a data entry device for receiving an input code, a keycode processor in communication with the data entry device, and a keycode transmitter in communication with the key code processor. The keycode processor is configured to generate a keycode from the input code in accordance with a predefined pseudo-random code generation algorithm. The keycode transmitter is configured to provide an indication of the keycode.

### BRIEF DESCRIPTION OF THE DRAWINGS

The present invention will now be described, by way of example only, with reference to the accompanying drawings, in which:
Fig. 1 is schematic view of an e-commerce clearance system, depicting a plurality of the transaction terminals, transaction registers and financial institution servers, and also depicting the secure e-commerce authorization system according to the present invention;
Fig. 2 is a schematic view of the secure e-commerce authorization system depicted in Fig. 1;
Figs. 3a, 3b together comprise a flow chart depicting the sequence of step carried out by the e-commerce clearance system when processing an e-commerce transaction; and
Fig. 4 is a schematic view of one variation of the transaction terminals depicted in Fig. 1.

### DETAILED DESCRIPTION OF THE PREFERRED EMBODIMENTS

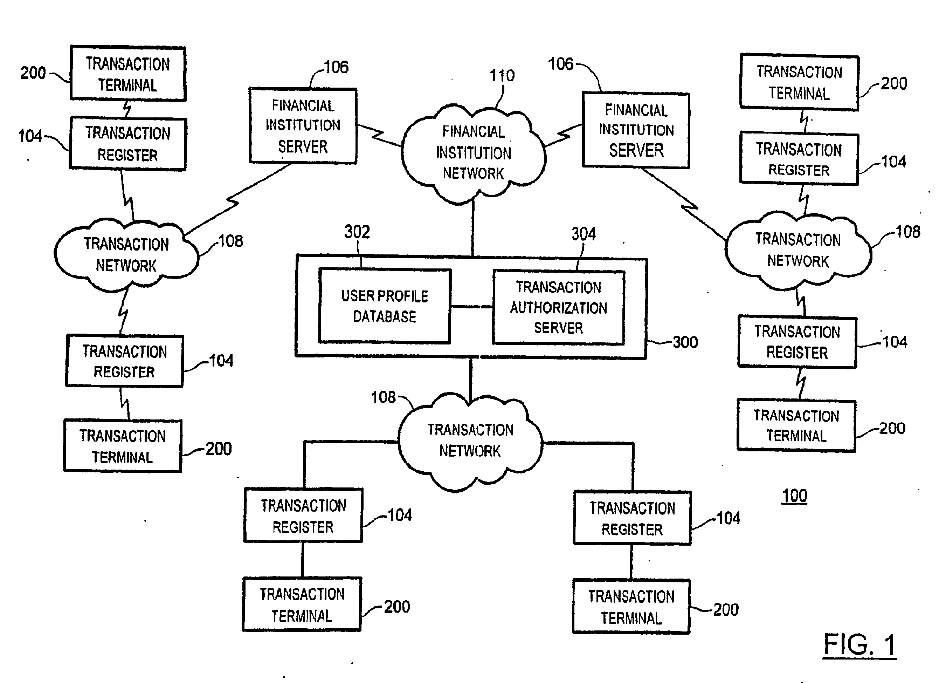

Turning to Fig. 1, an e-commerce clearance system, denoted generally as 100, is shown comprising a plurality of transaction registers 104, a plurality of financial institution servers 106, a plurality of e-commerce transaction terminals 200, and an e-commerce authorization system 300. The e-commerce clearance system 100 also includes a plurality of transaction networks 108a, 108b, 108c, and a financial institution network 110.

Each transaction register 104 and each transaction terminal 200 is associated with one of the financial institution servers 106 or the authorization system 300, and transmits transaction data to and receives transaction authorization data from the associated financial institution server 106 / authorization system 300 via the respective transaction network 108. The authorization system 300 is configured to authorize each transaction proposed by a customer, and receives transaction data from and transmits authorization data to the financial institution servers 106 via the financial institution network 110. Preferably, each of the transaction networks 108 and the financial institution network 110 are secure networks, however given the security of the scheme utilized herein for authorizing transactions, it should be understood that the transaction networks 108 can be open networks, if desired.

Although the e-commerce clearance system 100 is shown comprising a transaction authorization system 300 separate from the financial institution servers 106, it should be understood that a separate transaction authorization system 300 is not an essential feature of the present invention. Rather, each of the financial institution servers 106 could be configured to perform the authorization function of the authorization system 300, in which case the authorization system 300 could be eliminated and the e-commerce clearance system 100 could be implemented without significant changes to the existing e-commerce transaction infrastructure. However, the presence of a separate authorization system 300 allows a financial institution to take advantage of the secure authorization functions offered by the authorization system 300 without changing or adding to the existing software implemented on their respective financial institution servers 106.

It should also be noted that although the e-commerce clearance system 100 is shown comprising a plurality of transaction registers 104 in direct communication with the authorization system 300, the e-commerce clearance system 100 can function without any transaction registers 104 in direct communication with the authorization system 300, as long as the transaction registers 104 interface with at least one of the financial institution servers 106.

Prior to using the e-commerce clearance system 100, customers establish a debit (eg. bank account) transaction account with a financial institution. Alternately, customers may establish a credit transaction account with a financial institution. Typically, the financial institution will assign a unique transaction account identifier (eg. a bank card number, credit card number) to the transaction account, and provide the customer with a magnetic stripe card encoded with the transaction account identifier. Accordingly, preferably each of the data terminals 200 comprises a conventional Point of Sale (POS) terminal having a magnetic card reader for reading the transaction account identifier from the magnetic stripe card, a data entry device (such as a key pad) for entering a transaction authorization code (eg. a PIN), and a data display device for receiving information associated with a proposed transaction. Such POS terminals are well known and, accordingly, need not be described further.

Each transaction register 104 typically comprises an electronic cash register in direct communication with a respective one of the data terminals 200 for receiving the transaction account identifier and the authorization code and for providing the customer with a message indicating whether the proposed transaction was authorized. The transaction register 104 interfaces with the transaction network 108 and is configured to transmit transaction data packets to the authorization system 300 (typically via at least one of the financial institution servers 106) for the proposed transaction. Each transaction data packet includes the aforementioned transaction account identifier and the authorization code, and also includes additional transaction data provided by the merchant identifying the transaction (eg. date, merchant identifier code, amount spent on current transaction). As will become apparent, the transaction register 104 is also configured to receive message authorization data from the authorization system 300 (again typically via at least one of the financial institution servers 104) indicating whether the proposed transaction was authorized.

Before proceeding further, it should be understood that the present invention is not limited for use with POS terminals. Rather, in a scenario where a consumer wishes to withdraw funds from or deposit funds to a bank account, pay a bill from a bank account, or access a line of credit associated with a credit account, the data terminal 200 comprises a conventional Automated Teller Machine (ATM). As will be appreciated, in this latter scenario, such a data terminal will not interface with a transaction register 104, but instead will interface either with a financial institution server 106 or with a computer server having access to the financial institution network 110.

Also, it should be understood that the present invention is not limited for use with POS or ATM terminals having card readers for reading magnetic stripe cards. For instance, in one variation, customers are provided with a SmartCard (or similar electronically-coded card) encoded with the appropriate transaction account identifier, and the data terminal 200 comprises a SmartCard reader having an associated data entry device and display device. Further, typically each transaction register 104 and the associated data terminal 200 are provided in the same geographical location, such as a merchant's store. However, in yet another variation, at least one of the transaction registers 104 comprises an Internet server having software configured to provide a virtual store accessible via a web page, and one or more of the data terminals 200 comprises a computer terminal having software configured to transmit the customer's transaction account identifier and the authorization code to the merchant's Internet server over the Internet.

In a further variation, at least one of the transaction registers 104 comprises a wireless-enabled computer server having software configured to provide a virtual store, and one or more of the data terminals 200 comprises a wireless-enabled communications device (eg. a personal data assistant, a cellular telephone) having software configured to transmit the customer's transaction account identifier and the authorization code to the merchant's computer server over a wireless network. Other embodiments of the data terminal 200 and the transaction register 104 will become apparent to those skilled in the art, and are intended to be encompassed by the scope of the present invention.

The financial institution servers 106 are each associated with a respective financial institution, and manage the debits and credits applied towards each transaction account opened at the respective financial institution. Typically, each financial institution server 106 is disposed behind a respective financial institution firewall, and includes a customer account database which includes customer account records associated with each transaction account. Preferably, the financial institution network 110 comprises a secure banking network, such as the Interac network, or a credit network, such as the VISA network, and each financial institution server 106 interfaces with the banking network 110 and provides controlled access to the institution's customer account records over the banking network 110.

If a transaction account is a debit account, typically the customer account record identifies the bank transit number and bank account number associated with the bank account of a bank customer, the transaction account identifier (bank card number) which is encoded on the debit card assigned to the bank customer, and a PIN which the customer can use, together with the debit card, to electronically access the customer's bank account. However, if the transaction account is a credit account, typically the customer account record identifies the transaction account identifier (credit card number), a PIN, an expiration date of the transaction account identifier, and the credit limit of the customer's credit account.

The transaction authorization system 300 is configured to communicate with the financial institution servers 106 over the financial institution network 110. In addition, the authorization system 300 is also configured to communicate with the transaction registers 104 (if any) which are in direct communication with the authorization system 300. The transaction authorization system 300 comprises a user profile database 302, and a transaction authorization server 304 in communication with the user profile database 302 for determining whether a transaction proposed by one of the transaction terminals 200 should be authorized.

The user profile database 302 includes a plurality of user profile records each uniquely associated with a registered user of the e-commerce clearance system 100. Each user profile record includes the transaction account identifier identifying the transaction account opened by the registered user at its financial institution, and a Seed Identification Number (SIN).

If the user's transaction account is a debit account, typically the transaction account identifier comprises the bank card number which is encoded on the bank card assigned to the bank customer, and the customer's bank card PIN. However, if the user's transaction account is a credit account, the transaction account identifier comprises the customer's credit card number and the customer's credit card PIN.

The SIN is a seed value used by a keycode generator (typically provided to the user upon registration with the e-commerce clearance system 100) to generate pseudo-random keycodes. Preferably, the keycode generator includes a precision local clock, and is configured to generate the pseudo-random keycodes from the SIN at regular periodic intervals as dictated by the precision clock, using an algorithm which resists prediction of the next keycode without prior knowledge of the SIN, and which resists determination of the SIN from the keycodes. Further, preferably the SIN is uniquely associated with the user, and is not publicly disclosed. However, it should be understood that each SIN need not be uniquely associated with a user. Rather, any particular SIN may be randomly assigned to multiple users, provided that the SIN for a user is not publicly disclosed.

An exemplary keycode generator suitable for use with the e-commerce clearance system 100 is the SecureID (trade-mark) authenticator marketed by RSA Security. The SecureID authenticator generates a new 6-digit numeric code every 60 seconds using a seed value assigned by the manufacturer of the authenticator. The seed value, and the numeric code produced in any particular 60-second time frame, and are very difficult to determine without prior knowledge of the seed value, even if the numeric code in a preceding 60-second time frame is known. Consequently, the keycode produced by such a transaction keycode generator at any given instant in time will be very difficult to predict without prior knowledge of the assigned SIN.

It should be understood, however, that the e-commerce clearance system 100 is not limited for use with a keycode generator which generates pseudo-random transaction codes from a manufacturer-assigned SIN. Instead, the SIN may be a data word uniquely associated with the user. For instance, the SIN may be determined from a biometric analysis of physical characteristics of the user, such as fingerprint, retina or voice.

As discussed above, although the functions of the authorization system 300 may be integrated with one or more of the financial institution servers 106, if one or more financial institutions wishes to take advantage of the secure authorization features offered by the present invention but does not wish to update the software implemented on their respective financial institution servers 106, the e-commerce clearance system 100 should include a separate transaction authorization system 300. In this scenario, preferably each user profile record of the user profile database 302 implemented on the transaction authorization system 300 also includes a Virtual Account Number uniquely associated with a respective registered user, with the initial digits of the Virtual Account Number identifying a virtual account associated with the authentication system 300. Typically, the Virtual Account Number is encoded on a magnetic stripe card or an electronic card, and indicates that the customer's transaction account has an associated an associated pseudo-random keycode.

The financial institution servers 106 which have implemented the functions of the transaction authorization system 300 will include their own respective user profile databases 302, although the user profile records of their respective user profile databases 302 need not include a Virtual Account Number. As will become apparent, for these financial institution servers 106, the consumer's debit card number or credit card number can be used in replacement of the Virtual Account Number. Following this progression, if all the financial institution servers 106 implement the functions of the transaction authorization system 300, the separate transaction authorization system 300 can be eliminated completely.

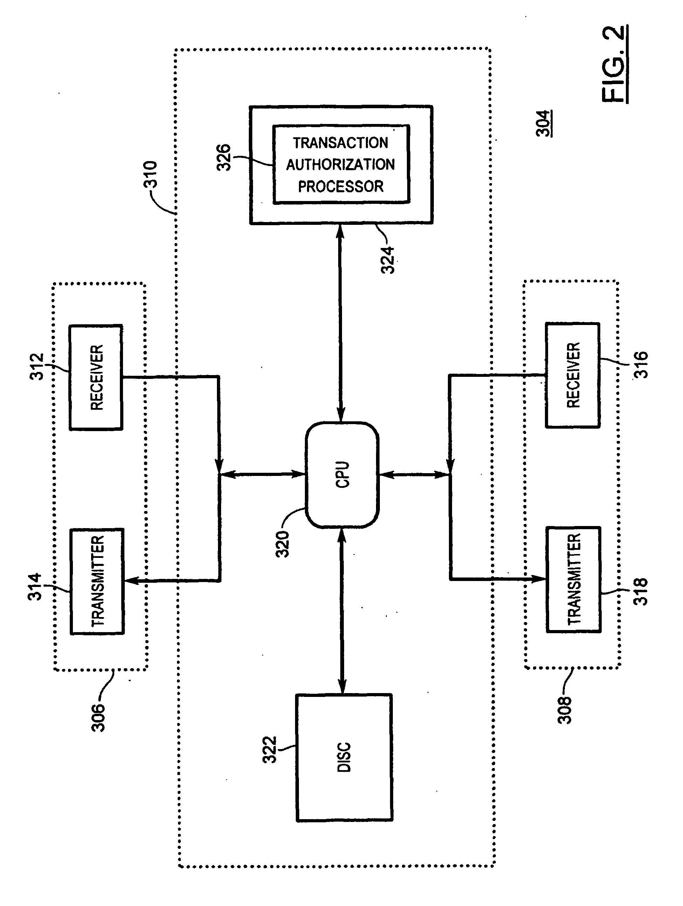

As shown in Fig. 2, the transaction authorization server 304 comprises a computer server including a transaction network transceiver 306 for directly interfacing with any transaction registers 104 over the associated transaction network 108 (if any), a financial institution network transceiver 308 for interfacing with the financial institution network 110, and a data processing system 310 in communication with the transaction network transceiver 306 and the financial institution network transceiver 308. The transaction network transceiver 306 comprises a first transaction data receiver 312 for receiving the transaction data packets from the transaction registers 104 directly connected to the authorization system 300 identifying a proposed transaction, and a first authorization data transmitter 314 for transmitting authorization data back to those same transaction registers 104 indicating whether the proposed transaction was authorized. Similarly, the financial institution network transceiver 308 comprises a second transaction data receiver 316 for receiving the transaction data packets (via the financial institution servers 106) from the transaction registers 104 directly connected to one of the financial institution servers 106, and a second authorization data transmitter 318 for transmitting authorization data back to those same transaction registers 104 indicating whether the proposed transaction was authorized.

The data processing system 310 comprises a central processing unit (CPU) 320, a non-volatile memory storage device (DISC) 322 (such as a magnetic disc memory or electronic memory) and a read/write memory (RAM) 324 both in communication with the CPU 320. Typical of many computing devices, the CPU 320 is driven by a precision clock which serves to control the timing of the processes executed by the data processing system 310.

The DISC 322 includes CPU instructions which, when loaded into the RAM 324, comprise processor instructions for the CPU 320. The processor instructions define in the RAM 324 a memory object defining a transaction authorization processor 326 in communication with the user profile database 302 and the transaction data receivers 312, 316. The transaction authorization processor 326 is configured with the same cryptographic algorithm used by the transaction code generator to determine the correct pseudo-random transaction code for the customer which originated the transaction data packets, and thereby determine the authenticity of the received transaction account identifier and authorization code. As with the transaction code generator, the transaction authorization processor 326 is configured to determine the correct pseudo-random transaction code based on the time kept by the precision clock and the UID associated with the customer in the user profile database 302.

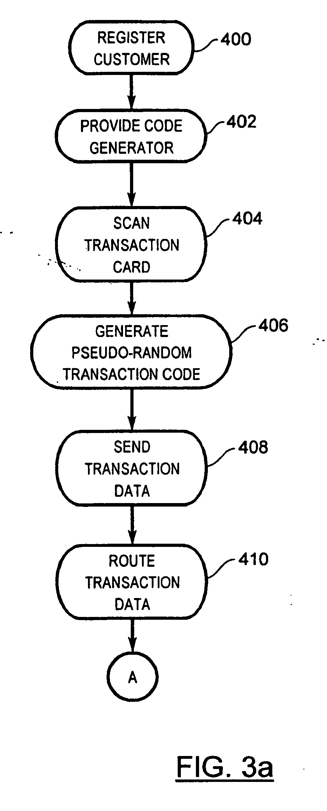

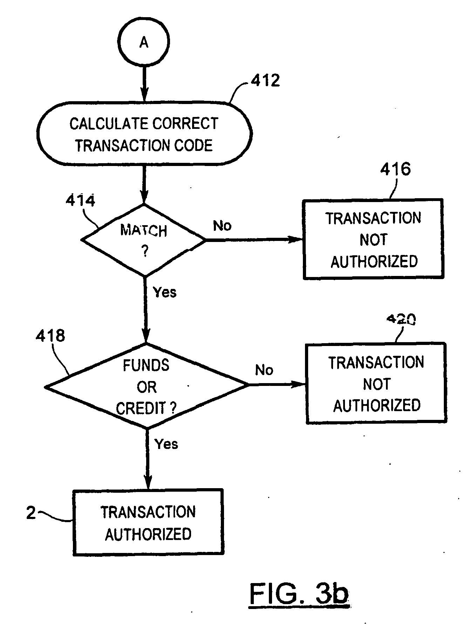

The method for securely authorizing e-commerce transactions with the e-commerce clearance system 100 will now be described with reference to Fig. 3. Initially, customers open a transaction account with a financial institution, and then register with the e-commerce clearance system 100 at step 400 by providing the system administrator of the transaction authorization system 300 with the customer's assigned transaction account identifier. If the financial institution server 106 associated with the customer's financial institution has not implemented the functions of the transaction authorization system 300, the financial institution will need the services of a transaction authorization system 300 to authorize e-commerce transactions using a pseudo-random transaction code. Accordingly, in this situation, the system administrator of the transaction authorization system 300 also assigns the customer with a unique Virtual Account Number, and provides the customer with a magnetic stripe card or electronic card encoded with the assigned Virtual Account Number.

For convenience, the Virtual Account Number (or the debit or credit transaction account number, in the case of a financial institution server 106 which has implemented the functions of a transaction authorization system 300) will be referred to as a Card Number, hereafter. Similarly, the magnetic stripe or electronic card encoded with the Card Number will be referred to as a Transaction Card hereafter.

After the system administrator of the transaction authorization system 300 has been provided with the customer's assigned transaction account identifier, the system administrator provides the customer with a transaction code generator, at step 402, and stores the SIN of the transaction code generator in the user profile database 302, together with the customer's transaction account identifier (and Virtual Account Number, if assigned).

When the registered customer wishes to enter into a commercial transaction with a merchant, the customer physically attends at the premises of the merchant and selects goods or services for purchase, lease or rent. The customer then scans the customer's Transaction Card with the transaction terminal 200, at step 404, to obtain the customer's Card Number. Alternately, if the merchant has maintained a virtual store over the Internet, the transaction register 104 will comprise an Internet server and the transaction terminal 200 will typically comprise a computer terminal or a wireless-enabled communications device. Consequently, the customer will electronically attend at the merchant's web site using the customer's computer terminal or communications device, and then electronically transmit the customer's Card Number to the merchant's Internet server at step 404.

The transaction terminal 200 will then respond with a prompt for the customer's PIN. At this point, the customer reads the keycode displayed on the customer's assigned keycode generator. Preferably, the customer then appends the customer's PIN to the generated keycode to yield a unique transaction code, and then enters the transaction code into the transaction terminal 200, at step 406. However, it should be understood that the use of both the keycode and the customer's PIN as a transaction code merely enhances the level of security associated with the proposed commercial transaction, and may be dispensed with if the additional level of security provided by both codes is deemed unnecessary.

The transaction terminal 200 then transmits the Card Number and the transaction code to the associated transaction register 104. Preferably, the transaction terminal 200 encrypts the Card Number and the transaction code prior to transmission to the transaction register 104. Using the transaction register 104, the merchant then transmits a transaction data packet comprising the Card Number, the transaction code and additional transaction data (eg. date, merchant identifier code, amount spent on current transaction) to the merchant's financial institution server 106 over the associated transaction network 108, at step 408.

The merchant's financial institution server 106 decrypts the transaction data packet upon receipt, and then retains a copy of the decrypted data packet for subsequent settlement with the customer's financial institution. Since the initial digits of the Card Number identify the financial institution server 106 or transaction authorization system 300 which issued the Transaction Card, at step 410 the merchant's financial institution server 106 routes the received transaction data packet to the appropriate financial institution server 106 or transaction authorization system 300 over the financial institution network 110. As will be apparent, if the transaction authorization system 300 is integrated with merchant's financial institution server 106, and the initial digits of the Card Number indicate that the Transaction Card was issued by the merchant's financial institution server, the merchant's financial institution server 106 will not transmit the transaction data packet over the financial institution network 110.

Upon receipt of the transaction data packet, the transaction authorization server 304 of the transaction authorization system 300 queries the user profile database 302 with the received Card Number to identify the SIN assigned to the customer. Using the retrieved SIN, at step 412 the transaction authorization processor 326 of the transaction authorization server 304 determines the correct pseudo-random keycode for the customer using the cryptographic algorithm discussed above. If the transaction code included with the transaction data packet also included the customer's PIN, the transaction authorization processor 326 queries the user profile database 302 with the received Card Number to identify the customer's PIN, and thereby determine the correct transaction code for the customer.

At step 414, the transaction authorization processor 326 determines whether the transaction code included with the transaction data packet matches the calculated transaction code. Since the keycode generator and the transaction authorization processor 326 both generate pseudo-random codes based on the time kept by a local precision clock, any drift between the respective precision clocks can lead to the keycode generator generating a different keycode than the transaction authorization processor 326. To address this possibility, preferably the transaction authorization processor 326 not only generates the keycode for the current time window (as determined by the current time kept by the local precision clock of the data processing system 310), but also generates the keycode for the preceding time window and the subsequent time window. If the keycode generated by the keycode generator matches the keycode generated by the transaction authorization processor 326 for the preceding or subsequent time window, the data processing system 310 advances or adjusts the present value of the time kept by its precision clock to more closely coincide with the present value of the time kept by the precision clock of the keycode generator.

If, at step 414, the transaction authorization processor 326 determines that the transaction code included with the transaction data packet does not match the calculated transaction code, the transaction authorization system 300 transmits an authorization data packet back to the merchant's financial institution server 106, at step 416, indicating that the proposed commercial transaction with the Card Number was not approved. The merchant's financial institution server 106 then transmits a message back to the transaction register 104 and the associated transaction terminal 200 advising the customer and the merchant that the proposed commercial transaction was not approved.

On the other hand, if at step 414 the transaction authorization processor 326 determines that the transaction code included with the transaction data packet matches the calculated transaction code, but the transaction authorization system 300 is not integrated with the customer's financial institution server 106, the transaction authorization system 300 transmits over the financial institution network 110 a revised transaction data packet to the financial institution server 106 associated with the customer's financial institution. The revised transaction data packet includes either the customer's actual bank card number + PIN; or credit card number, as determined by the contents of the user profile database 302. In addition, the revised transaction data packet also includes the additional transaction data included with the original transaction data packet (ie. date, merchant identifier code, amount spent on current transaction).

Upon receipt of the revised transaction data packet, the customer's financial institution server 106 determines whether the received bank card number + PIN, or credit card number is correct. If the received bank card number + PIN, or credit card number is not correct, the customer's financial institution server 106 transmits a message back to the transaction register 104 and the associated transaction terminal 200 advising the customer and the merchant that the proposed commercial transaction was not approved. However, if the received bank card number + PIN, or credit card number is correct, the process proceeds to step 418.

Alternately, if at step 414, the transaction authorization processor 326 determines that the transaction code included with the transaction data packet matches the calculated transaction code, and the transaction authorization system 300 is integrated with the customer's financial institution server 106, at step 418 the financial institution server 106 determines whether sufficient funds or credit are available for the transaction. If insufficient funds or credit are available, the customer's financial institution server 106 transmits an authorization data packet back to the merchant's financial institution server 106, at step 420, indicating that the proposed commercial transaction with the Card Number was not approved.

However, if sufficient funds or credit are available, the customer's financial institution server 106 replies with a message to the transaction authorization system 300, at step 422, indicating that the proposed transaction was authorized. Upon receipt of the reply from the customer's financial institution server 106, the transaction authorization system 300 transmits an authorization data packet back to the merchant's financial institution server 106, indicating that the proposed commercial transaction with the Card Number was approved. The merchant's financial institution then effects settlement with the customer's financial institution.

As will be apparent, since the transaction code transmitted by the transaction terminal 200 is generated from a secret code (ie. SIN code) as input to a cryptographic algorithm, and since the transaction code changes periodically with each calculation iteration and cannot be readily predicted, the present invention provides a higher degree of security against the initiation of fraudulent transactions than the prior art. The security against fraudulent transactions and the speed of authorization of the transaction are also both enhanced by the elimination of the need for the authorization system 300 to transmit a transaction code to the customer at the initiation of a transaction.

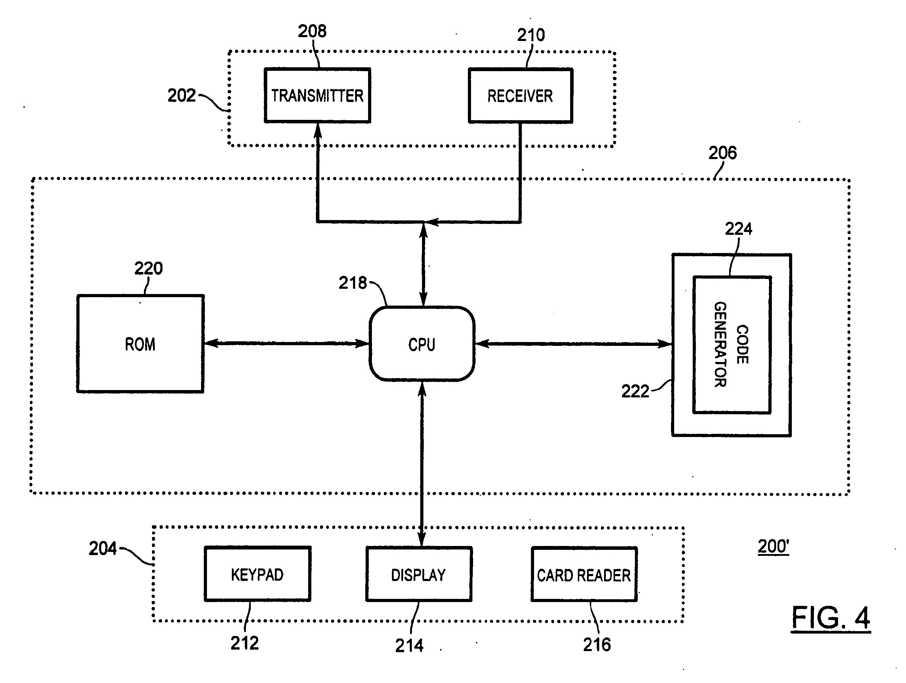

Thus far in the discussion, the transaction terminal 200 has been described as being separate and distinct from the transaction code generator. However, the transaction terminal may also be integrated with a transaction code generator so as to provide a transaction register 104 with the customer's transaction account identifier and a pseudo-randomly generated transaction code. One such combination transaction register is depicted in Fig. 4.

The combination transaction terminal 200' preferably is configured as an electronic communications device, such as computer terminal or wireless-enabled personal data assistant or telephone, and includes a transaction network transceiver 202 for interfacing with one of the transaction registers 104 over the transaction network 108, a user interface 204, and a data processing system 206 in communication with the transaction network transceiver 202 and the user interface 204. The transaction network transceiver 202 comprises a transaction data transmitter 208 for transmitting transaction data packets to the associated transaction register 104, and an authorization data receiver 210 for receiving authorization data packets from the associated transaction register 104 indicating whether the proposed transaction was authorized.

The user interface 204 comprises a data input device 212, such as a keyboard, keypad, touch-sensitive membrane or voice recognition input port; and a data display 214, such as an LCD, LED or CRT display. In addition, the user interface 204 includes a card reader 216, such as a magnetic card reader for reading the data encoded on a magnetic stripe card and/or a electronic card reader for reading the data encoded on an electronic card, such as a Smart-Card.

The data processing system 206 comprises a central processing unit (CPU) 218, and a non-volatile memory storage device (ROM) 220 (such as an electronic memory) and a read/write memory (RAM) 222 both in communication with the CPU 218. As discussed above, the CPU 218 is driven by a precision local clock which serves to control the timing of the processes executed by the data processing system 206. The ROM 220 includes a SIN, and CPU instructions which, when loaded into the RAM 222, comprise processor instructions for the CPU 218. The processor instructions define in the RAM 222 a memory object defining a transaction code generator 224 which is configured with the cryptographic algorithm described above for generating pseudo-random transaction codes.

The operation of the e-commerce clearance system 100 using the transaction terminal 200' is substantially similar to its operation using the transaction terminal 200, except for the following differences. At step 406, when the transaction terminal 200' prompts the customer to enter the assigned PIN, rather than reading a keycode from a separate transaction code generator, the customer enters the PIN into the transaction terminal 200' using the data input device 212. In response, the transaction code generator 224 generates a pseudo-random transaction code using the PIN and the customer's assigned SIN as inputs to the cryptographic algorithm. Preferably, the pseudo-random transaction code is a 4-digit transaction code to comply with the existing infrastructure for the processing of PINs.

Using the transaction register 104, the merchant then transmits a transaction data packet comprising the Card Number, the transaction code, date, merchant identifier code, and amount spent on current transaction to the merchant's financial institution server 106 over the associated transaction network 108, at step 408. As will be apparent, unlike the previous embodiment, the transaction data packet does not include both the pseudo-random keycode and the PIN. Subsequently, at step 412, the transaction authorization processor 326 of the transaction authorization server 304 determines the correct transaction code for the customer using the same cryptographic algorithm and the PIN stored in the user profile database 302. Authorization and clearance for the transaction occur in the same manner as described above.

## Claims

1. A method for conducting secure e-commerce transactions, comprising the steps of:
receiving at an authorisation system from a transaction register (104) a transaction data packet;
the transaction data packet comprising a transaction account identifier, an authorisation code for authorising a proposed transaction and being generated by a keycode generator of a transaction terminal, and transaction data;
the authorisation code comprising at least a pseudo-random keycode generated by the keycode generator at periodic intervals dictated by the keycode generator's local precision clock from a seed identification number, the seed identification number being associated with the transaction account identifier and the generation being independent of transaction data and the transaction account identifier;
the keycode having been generated for the current time window;
generating at the authorisation system keycodes for the current, previous and subsequent time windows according to the time kept by the authorisation system's local precision clock;
determining an authenticity of the received authorisation code by matching it with one of the keycodes generated by the authorisation system; and
authorising the transaction in accordance with the determined authorisation code authenticity.

2. The method of claim 1 wherein the authorization code comprises the keycode appended with a PIN associated with the transaction account identifier.

3. The method of any of claims 1 or 2 which further comprises the step of generating an authorization signal for the proposed transaction after the authenticity of the received authorization code has been determined.

4. A machine readable data carrier containing instructions which when read on to a computer cause that computer to provide the method according to any one of claims 1 to 3.

## Patentansprüche

1. Verfahren zum Durchführen sicherer Transaktionen im elektronischen Handel, umfassend die Schritte:
Empfangen eines Transaktionsdatenpakets von einem Transaktionsregister (104) bei einem Autorisationssystem; wobei
das Transaktionsdatenpaket eine Transaktionskontokennung, einen Autorisationscode, welcher zum Autorisieren einer vorgeschlagenen Transaktion dient und durch einen Verschlüsselungscodegenerator eines Transaktionsterminals erzeugt wird, und Transaktionsdaten umfasst;
der Autorisationscode mindestens einen pseudozufälligen Verschlüsselungscode umfasst, welcher durch den Verschlüsselungscodegenerator in periodischen Intervallen, welche durch den lokalen Präzisionszeitgeber des Verschlüsselungscodegenerators festgelegt werden, aus einer Basis-Identifikationsnummer erzeugt wird, wobei die Basis-Identifikationsnummer mit der Transaktionskontokennung verknüpft ist und die Erzeugung unabhängig von Transaktionsdaten und der Transaktionskontokennung ist; und
der Verschlüsselungscode für das gegenwärtige Zeitfenster erzeugt wurde;
Erzeugen von Verschlüsselungscodes für das gegenwärtige, vorangehende und nachfolgende Zeitfenster gemäß der Zeit, welche durch den lokalen Präzisionszeitgeber des Verschlüsselungscodegenerators eingehalten wird, bei dem Autorisationssystem;
Bestimmen der Authentizität des empfangenen Autorisationscodes durch Abgleichen davon mit einem der Verschlüsselungscodes, welche durch das Autorisationssystem erzeugt wurden; und
Autorisieren der Transaktion gemäß der bestimmten Autorisationscode-Authentizität.

2. Verfahren nach Anspruch 1, wobei der Autorisationscode den Verschlüsselungscode mit einer angehängten PIN-Nummer, welche mit der Transaktionskontokennung verknüpft ist, umfasst.

3. Verfahren nach Anspruch 1 oder 2, welches ferner den Schritt umfasst, ein Autorisationssignal für die vorgeschlagene Transaktion zu erzeugen, nachdem die Authentizität des empfangenen Autorisationscodes bestimmt wurde.

4. Maschinenlesbarer Datenträger, welcher Instruktionen umfasst, welche, wenn diese in einen Computer eingelesen werden, bewirken, dass der Computer das Verfahren nach einem der Ansprüche 1 bis 3 bereitstellt.

## Revendications

1. Procédé pour conduire des transactions commerciales électroniques sécurisées, comprenant les étapes consistant à :
recevoir au niveau d'un système d'autorisation, depuis un registre de transaction (104) un paquet de données de transaction,
le paquet de données de transaction comprenant un identifcateur de compte de transaction, un code d'autorisation pour autoriser une transaction proposée et qui est généré par un générateur de code de clé d'un terminal de transaction et des données de transaction,
le code d'autorisation comprenant au moins un code de clé pseudo-aléatoire généré par le générateur de code de clé à des intervalles périodiques imposés par l'horloge de précision locale du générateur de code de clé à partir d'un numéro d'identification de valeur de départ, le numéro d'identification de valeur de départ étant associé à l'identificateur de compte de transaction et la génération étant indépendante des données de transaction et de l'identificateur de compte de transaction,
le code de clé ayant été généré pendant la fenêtre de temps en cours,
la génération au niveau du système d'autorisation des codes de clés pour les fenêtres de temps actuelle, précédente et suivante conformément au temps conservé par l'horloge de précision locale du système d'autorisation,
la détermination de l'authenticité du code d'autorisation reçu en le faisant correspondre à l'un des codes de clés générés par le système d'autorisation, et
autoriser la transaction conformément à l'authenticité de code d'autorisation déterminée.

2. Procédé selon la revendication 1, dans lequel le code d'autorisation comprend le code de clé auquel est annexé un numéro PIN associé à l'identificateur de compte de transaction.

3. Procédé selon l'une quelconque des revendications 1 ou 2, qui comprend en outre l'étape consistant à générer un signal d'autorisation pour la transaction proposée après que l'authenticité du code d'autorisation reçu a été déterminée.

4. Support de données lisibles par une machine contenant des instructions qui, lorsqu'elles sont lues sur un ordinateur, amènent cet ordinateur à procurer le procédé selon l'une quelconque des revendications 1 à 3.
